# EUROPEAN PATENT APPLICATION

(11) **EP 2 712 528 A1**
(43) Date of publication of application: **02.04.2014**
(21) Application number: 13184846.7
(22) Date of filing: 17.09.2013
(51) Int. Cl.: A47J 43/28

(54) **Ice cream scooping device**

(30) Priority: 28.09.2012 EP 12186506
(71) Applicant: Unilever PLC, London, Greater London EC4Y 0DY (GB); Unilever NV, 3013 AL Rotterdam (NL)
(72) Inventor: Burns, Ian William, Bedford, Bedfordshire MK44 1LQ (GB); D'Agostino, Tommaso, Bedford, Bedfordshire MK44 1LQ (GB)
(74) Representative: Acham, Nicholas Clive

(57) **Abstract**

Ice cream scooping device comprising:
. a handle (114,214)
. a scoop limiting a generally cylindrical cavity (112,212)
. an opening (122,222) for ejecting the ice cream contained in the cylindrical cavity
. ejecting means (104,204) for ejecting the ice cream contained in the cylindrical cavity

Wherein,
A scooping opening (102,202) is located on the side of the cylindrical cavity, and wherein the ice cream scooping device additionally comprises closing means (103,203) suitable for closing the scooping opening.

## Description

### Technical field of the invention

The present invention relates to improvements in ice cream scoop.

### Background of the invention

Many edible products, such as ice creams, are provided in containers. Portions of said edible products are then dispensed from the container. In the case of ice cream, the container may vary in size depending on whether the ice cream is being dispensed at home, in vehicles selling ice cream or in ice cream parlours, restaurants and the like. The ice cream is then "scooped" out of the container and often placed on top of wafer cone.

US 4 859 168 (Calder) discloses a combination scoop and mould provided with a mould cavity formed of said walls and a food displacement arrangement which ejects the moulded food therefrom. Preferably, the food displacement member which causes ejection of the food also forms a back wall of the mould cavity and is coupled to a trigger which is actuatable by the user of the scoop arrangement. Preferably, the side walls are planar and parallel with each other, and may have any desired shape. Such a shape will determine the shape of the edible novelty which is formed by use of the scoop. In certain embodiments, the side walls may be replaceable so that a variety of novelty shapes may be used

US 2 786 429 discloses an ice cream scoop comprising a mould having a square cross section, four side walls and a wall. The bottom of said mould is open allowing for the ice cream to enter it. A handle, equipped with ejection means is fixed to the top wall. The ejector means allows for the ice cream inside the mould to be discharged from it through the opening.

A variant of such a device wherein the mould has a circular cross section is commercially available over the internet from Cuisipro under the name "scoop and stack"

http://www.vat19.com/dvds/cuisipro-ice-cream-scoop-and-stack.cfm

http://www.thegreenhead.com/2008/06/cuisipro-ice-cream-scoop-stack.php

One drawback of such a device is that the portion delivered can only be cylindrical.

There is a need for a scooping device which allows for the delivery of ice cream portions of various shapes.

### Brief description of the invention

It is the object of the present invention to provide an ice cream scooping device comprising:
- a handle
- a scoop limiting a generally cylindrical cavity
- an opening for ejecting the ice cream contained in the cylindrical cavity
- ejecting means for ejecting the ice cream contained in the cylindrical cavity

Wherein,
A scooping opening is located on the side of the cylindrical cavity.

Preferably, the ice cream scooping device also comprises closing means suitable for closing the scooping opening.

Preferably, the ice cream is a frozen confection as described in ICE CREAM - Fourth Edition - W S Arbuckle - Chapman & Hall - pages 297 to 312.

Preferably also, the ice cream is at a temperature of -14 +/- 2°C.

### Detailed description of the invention

The present invention will be described with reference to the following figures wherein:
- Figure 1 represents a scooping device according to US2,786,429;
- Figure 2 represents (a) a vertical and (b) cross-sectional view of a first embodiment of the scooping device according to the invention; and
- Figure 3 represents (a) a vertical cross-sectional and (b) an isometric view of a second embodiment of the ice cream scooping device of the invention.

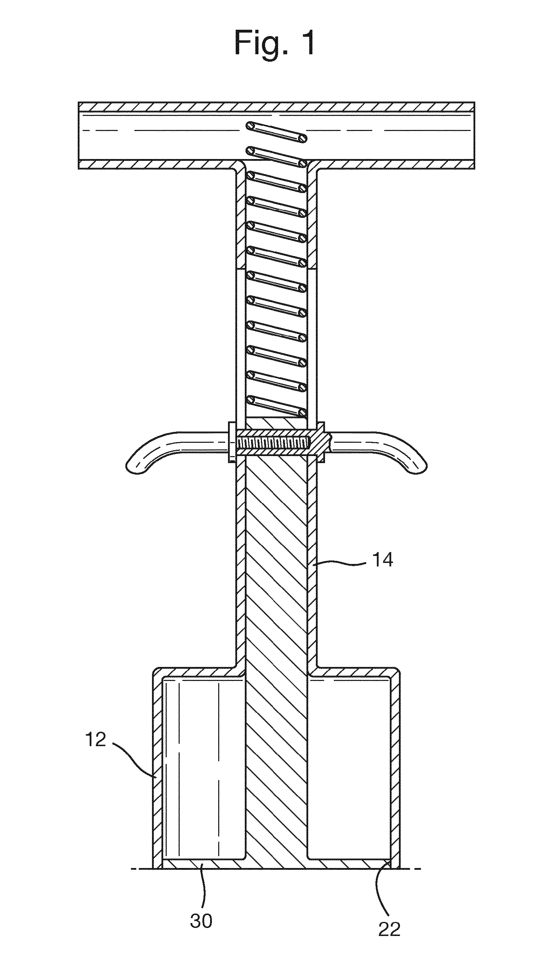

As seen in Figure 1, a scooping device of the prior art is constituted by a handle 14, a scoop limiting a generally cylindrical cavity 12, an opening 22 for ejecting the ice cream contained in the cylindrical cavity, ejecting means 30 for ejecting the ice cream contained in the cylindrical cavity.

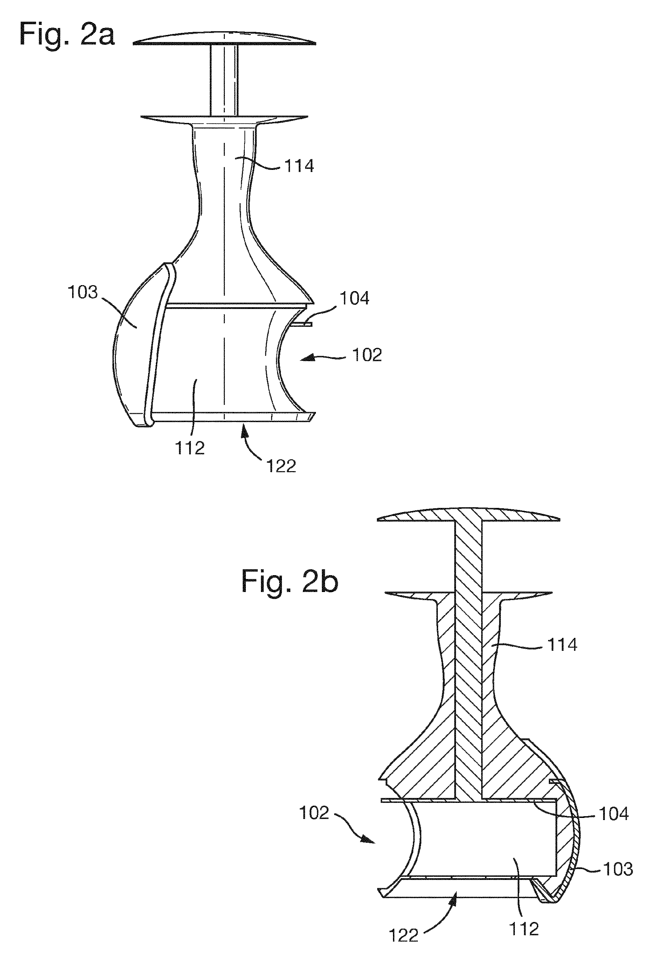

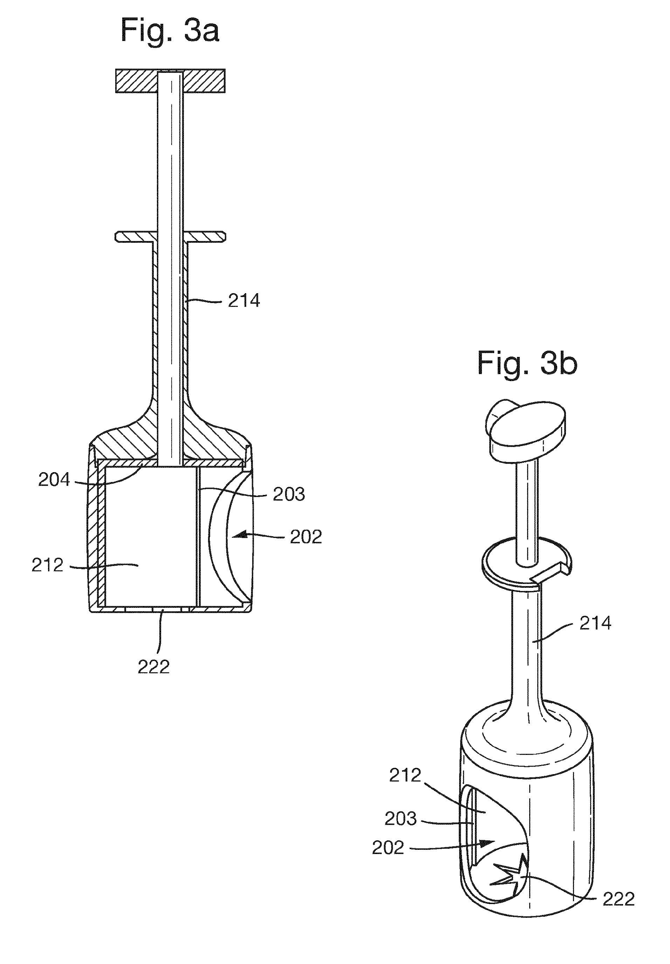

As can be seen in Figure 2 and Figure 3, an opening (102,202) is located on the vertical side of the wall limiting the cylindrical cavity (112,212). This opening (102,202) allows for scooping the ice cream contained in a container (not represented) thus filling the cavity (112,212).

Once the cavity has been filled with ice cream, the opening (102,202) is closed by closing means (103,203) which can be, for example, an external rotatably mounted shutter.

Then a piston (104,204) is pushed through the handle (114,214) ejecting the ice cream through the opening (122,222) which can be of any shape, for example a star. This opening (122,222) can take several/ many forms: it can be a shaped hole of such a size that during the scooping process ice cream does not extrude but when further pressure is applied to the scooped ice cream, ice cream is extruded. Alternatively, it can consist of a silicone membrane suitably designed and shaped to not permit ice cream to come through during the scooping process but when further pressure is applied to the scooped ice cream in the head it does permit the ice cream through. The aperture allows the ice cream to be shaped to give a pleasing texture to the extruded product.

## Claims

1. Ice cream scooping device comprising:
. a handle (114,214)
. a scoop limiting a generally cylindrical cavity (112,212)
. an opening (122,222) for ejecting the ice cream contained in the cylindrical cavity
. ejecting means (104,204) for ejecting the ice cream contained in the cylindrical cavity
Wherein,
A scooping opening (102,202) is located on the side of the cylindrical cavity, and wherein the ice cream scooping device additionally comprises closing means (103,203) suitable for closing the scooping opening.
